# DEMANDE DE BREVET EUROPEEN

(11) **EP 2 178 253 A1**
(43) Date de publication de la demande: **21.04.2010**
(21) Numéro de dépôt: 09173319.6
(22) Date de dépôt: 16.10.2009
(51) Int. Cl.: H04L 12/56

(54) **Transmission d'information de signalisation entre des entités communicantes**

(30) Priorité: 16.10.2008 FR 0857014
(71) Demandeur: FRANCE TELECOM, 75015 Paris (FR)
(72) Inventeur: Christin, Philippe, 35000, Rennes (FR); Cariou, Laurent, 35700, Rennes (FR)

(57) **Abrégé**

Procédé de transmission d'une information de signalisation entre une entité communicante d'origine (EC1) et une entité communicante destinataire (EC2), les entités étant en communication en mettant en oeuvre des trames d'une couche de liaison de données (MAC) encapsulées respectivement dans des trames (PHY) d'une couche physique comprenant en outre un entête et un champ de fin de trame comportant une séquence de bourrage. L'information de signalisation est transmise dans au moins une séquence de bourrage.

## Description

Le domaine de l'invention est celui des réseaux de télécommunication.

Plus particulièrement, l'invention concerne la transmission d'informations de signalisation entre des entités communicantes.

Le modèle de communication OSI, normalisé par l'ISO (pour "International Organization for Standardization" en anglais) définit la gestion de service de transmission de données au moyen de sept couches protocolaires superposées : la couche physique (couche 1), la couche liaison de données (couche 2), la couche réseau (couche 3), la couche transport (couche 4), la couche session (couche 5), la couche présentation (couche 6), et la couche application (couche 7).

Les trois premières couches, dites couches basses, sont relatives à la mise en oeuvre de la connexion et au transport des données. Les quatre couches suivantes, dites couches hautes, sont responsables du traitement des données permettant d'offrir le service par le réseau de télécommunication radio.

Les échanges de signalisation entre deux entités communicantes sont effectués au niveau de la couche liaison de données au moyen d'une structure de trames, dites trames MAC (pour "Medium Access Control" en anglais), et véhiculés par un lien radio ou un lien filaire.

Une entité communicante destinataire de données doit nécessairement connaître le format des informations de signalisation afin de recevoir correctement ces données. De ce fait, le contenu et le formalisme des trames MAC sont déterminés par des spécifications établies par des organismes de normalisation. La transmission d'une information de signalisation optionnelle ou supplémentaire nécessite alors la mise en oeuvre de requêtes visant à informer l'entité communicante destinataire de cette information. Ces requêtes sont effectuées par utilisation de champs spécifiques dans les trames MAC. Ces champs sont généralement de longueur variable. La transmission de ces requêtes, souvent suivie d'une réponse comme par exemple un accusé de réception, impacte de façon significative le débit de transmission entre les deux entités communicantes, mais également le débit des autres utilisateurs dans le cas de partages de ressources sur le lien radio ou le lien filaire.

Particulièrement, la mise en oeuvre de techniques d'adaptation de lien, par exemple avec changement du débit, de la modulation et/ou de type de codeur utilisés par la couche physique en fonction de la qualité du lien, nécessite la connaissance de la qualité du lien par l'entité communicante mettant en oeuvre ces techniques. Typiquement, dans le cas d'un système de télécommunication radio, l'entité communicante doit connaître la qualité du canal de propagation associé au lien radio.

A titre d'exemple, pour le système de télécommunication radio Wifi tel que défini dans la spécification 802.11 établi par l'organisme IEEE (pour "Institute of Electrical and Electronics Engineers" en anglais), la demande d'information s'effectue par utilisation d'une trame MAC particulière, dite trame de gestion, de type REQUEST. L'entité communicante destinataire de la demande acquitte la réception de cette trame, puis répond par une trame de gestion MAC de type RESPONSE dans laquelle elle transmet l'information de qualité du canal de propagation. L'entité communicante mettant en oeuvre la technique d'adaptation de lien peut alors définir un nouvel agencement des données.

La mise en oeuvre de ces techniques d'adaptation de lien doit de plus prendre en compte le caractère évolutif de la qualité du lien dans le temps. Ainsi, l'entité communicante d'origine est dans la nécessité d'effectuer très régulièrement ces requêtes. Il y a donc une réduction importante du débit de transmission par occupation de la bande passante pour ces échanges d'information de signalisation.

Il existe ainsi un besoin de transmission d'information de signalisation sans impacter le débit de transmission. De plus, il est souhaitable de garantir une interopérabilité avec les entités communicantes existantes.

Pour atteindre cet objectif, l'invention propose un procédé de transmission d'une information de signalisation entre une entité communicante d'origine et une entité communicante destinataire, les entités étant en communication en mettant en oeuvre des trames d'une couche de liaison de données encapsulées respectivement dans des trames d'une couche physique comprenant en outre un entête et un champ de fin de trame comportant une séquence de bourrage. L'objectif est atteint en ce que l'information est transmise dans au moins une séquence de bourrage.

Ce procédé permet ainsi la transmission de signalisation sans utilisation de requête spécifique. L'utilisation d'une séquence de bourrage associée à une trame d'une couche de liaison de données permet d'une part de ne pas induire de réduction du débit car il n'y a pas de consommation supplémentaire de la bande passante, et permet d'autre part une interopérabilité avec des entités existantes qui peuvent ignorer le contenu d'une séquence de bourrage.

Selon une caractéristique de l'invention, la au moins une trame d'une couche de liaison de données est une trame de contrôle et plus particulièrement une trame de contrôle de l'un des types ACK, BlockAck, ou CTS.

L'utilisation des trames de contrôle permet d'une part d'exploiter la séquence de bourrage dont la longueur est connue et d'autre part d'assurer une transmission systématique de l'information de signalisation et assurer une fiabilité de l'information de signalisation au cours du temps.

Selon une caractéristique de l'invention, l'information de signalisation est une indication d'une puissance d'un signal reçu et/ou indication d'une qualité d'un signal reçu et/ou une indication d'un schéma de modulation et de codage.

L'entité communicante destinataire est ainsi informée de la qualité du lien correspondant au transport de données entre l'entité destinataire et l'entité communicante d'origine. L'entité communicante destinataire peut alors appliquer une technique d'adaptation de lien pertinente, par exemple par modification du débit, du schéma de modulation et codage, de la puissance émission, c'est-à-dire en d'autres termes l'agencement des données.

L'invention propose également un procédé de réception d'une information de signalisation entre une entité communicante d'origine et une entité communicante destinataire, les entités étant en communication en mettant en oeuvre des trames d'une couche de liaison de données encapsulées respectivement dans des trames d'une couche physique comprenant en outre un entête et un champ de fin de trame comportant une séquence de bourrage. Le procédé de réception est caractérisé en qu'il décode l'information de signalisation transmise dans au moins une séquence de bourrage associée à au moins une des trames d'une couche de liaison de données.

L'invention concerne également un dispositif de transmission d'information de signalisation pour une entité communicante d'origine en communication avec une entité communicante destinataire, les entités communicantes mettant en oeuvre des trames d'une couche de liaison de données encapsulées respectivement dans des trames d'une couche physique comprenant en outre un entête et un champ de fin de trame comportant une séquence de bourrage. Le dispositif comprend:
- des moyens agencés pour insérer l'information de signalisation dans au moins une séquence de bourrage.

L'invention concerne également un dispositif de réception d'information de signalisation pour une entité communicante destinataire en communication avec une entité communicante d'origine, les entités communicantes mettant en oeuvre des trames d'une couche de liaison de données encapsulées respectivement dans des trames d'une couche physique comprenant en outre un entête et un champ de fin de trame comportant une séquence de bourrage. Le dispositif comprend:
- des moyens agencés pour décoder l'information transmise dans au moins une séquence de bourrage.

L'invention concerne également une entité communicante comportant l'un au moins des dispositifs précités.

D'autres caractéristiques et avantages de la présente invention apparaîtront plus clairement à la lecture de la description suivante de plusieurs modes particuliers de réalisation du procédé de transmission d'information de signalisation donnés à titre de simples exemples illustratifs et non limitatifs, et des dessins annexés, sur lesquels :
- la figure 1 représente un exemple de structure de trame couche liaison de données et couche physique,
- la figure 2 représente de façon schématique les éléments constitutifs de la transmission d'informations de signalisation entre une entité communicante d'origine et une entité communicante destinataire selon l'invention,
- la figure 3 représente les principales étapes du procédé de transmission d'informations de signalisation mises en oeuvre dans l'entité communicante d'origine selon l'invention,
- la figure 4 représente les principales étapes du procédé de réception d'informations de signalisation mise en oeuvre dans l'entité communicante destinataire selon l'invention.

Dans les réseaux de télécommunications, de même que dans les réseaux informatiques, une trame, dite trame MAC, est un bloc d'informations véhiculé par un support, par exemple un lien radio ou un lien filaire telle par exemple une fibre optique. Dans un modèle de communication OSI, une trame MAC correspond à la couche 2 nommée couche de liaison de données.

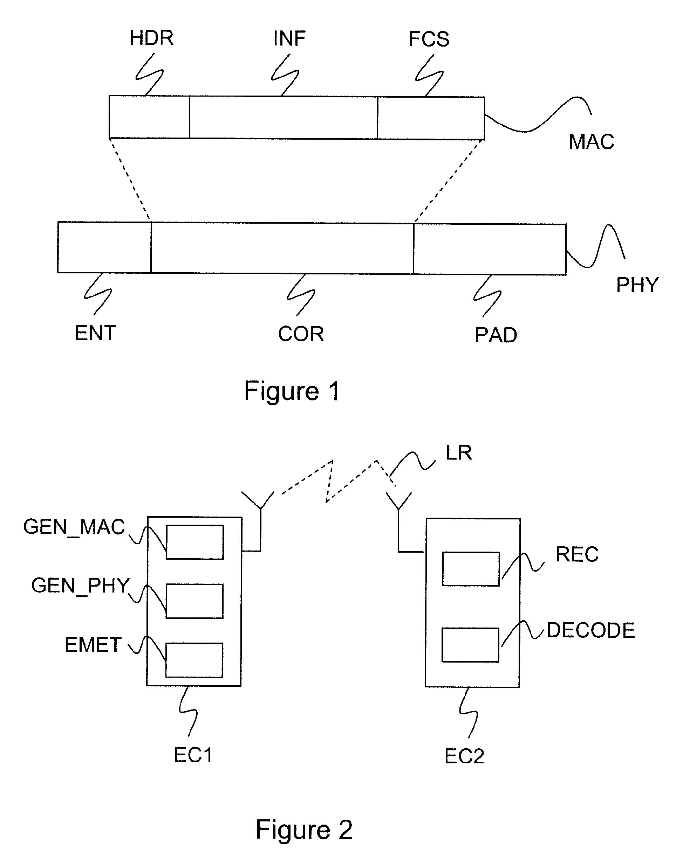

Ainsi que représentée en **figure 1**, une trame MAC comporte un entête HDR, un corps INF, et un champ de fin de trame FCS. Par exemple, une trame MAC de type Ethernet comporte un entête de 8 octets et le champ de fin de trame contient 4 bits de contrôle de redondance cyclique CRC (pour "Cyclique Redundancy code" en anglais). Une trame MAC, dans le cas du réseau de télécommunication Wifi tel que défini dans la spécification 802.11, comporte de même un entête de 30 octets, un corps et une fin de trame permettant la correction d'erreur. L'entête comporte en particulier un champ spécifiant le type et la fonction de la trame MAC. On distingue ainsi traditionnellement les trames MAC de gestion qui sont utilisées par exemple pour l'authentification des entités communicantes ou pour la synchronisation, les trames MAC de contrôle ou bien encore les trames MAC de données.

Une trame MAC est encapsulée dans une trame de couche 1 correspondant à la couche physique du modèle OSI afin de permettre la transmission des informations sur le lien. La trame PHY de couche 1, dite trame physique, comporte un entête ENT, un corps COR contenant la trame MAC, et un champ de fin de trame PAD comportant une séquence de bourrage PAD ("padding" en anglais) permettant d'obtenir une structure de trame physique se comptant en octets.

Les bits de la séquence de bourrage sont en nombre variable, fonction en particulier du type de trame MAC transportée et des types de modulations et/ou codeurs utilisés pour le transport sur le lien. Ils sont positionnés à une valeur prédéfinie et le contrôle d'erreurs sur ces bits de bourrage n'est pas garanti.

La **figure 2** représente de façon schématique les éléments constitutifs de la transmission d'informations de signalisation entre une entité communicante d'origine et une entité communicante destinataire selon l'invention. Une entité communicante est par exemple un terminal mobile, un assistant PDA (pour "Personal Digital Assistant" en anglais) ou encore un ordinateur équipé d'une carte communicante. L'entité communicante d'origine EC1 est en communication avec une entité communicante destinataire EC2 par un lien, par exemple un lien radio LR. L'entité communicante d'origine EC1 comporte un dispositif de transmission d'information de signalisation selon l'invention.

Dans la figure 2 sont seulement représentés les moyens inclus dans l'entité communicante d'origine EC1 en rapport avec l'invention.

L'entité communicante d'origine EC1 comporte:
- un générateur GEN_MAC de trames MAC de couche de liaison de données,
- un générateur GEN_PHY de trames physiques PHY agencé pour insérer des informations de signalisation dans une séquence de bourrage associée aux trames MAC,
- un émetteur EMET de trames physiques délivrées par le générateur GEN_PHY.

L'entité communicante destinataire EC2 comporte un dispositif de réception d'informations de signalisation selon l'invention.

Dans la figure 2 sont seulement représentés les moyens inclus dans l'entité communicante destinataire EC2 en rapport avec l'invention.

L'entité communicante destinataire EC2 comporte:
- un récepteur REC de trames physiques émises par l'entité communicante d'origine EC1,
- un décodeur DECODE de trames physiques agencé pour décoder des informations de signalisation dans une séquence de bourrage associé aux trames MAC.

Le fonctionnement des moyens présentés ci-dessus est détaillé dans la suite par la description des étapes du procédé de transmission d'informations de signalisation entre l'entité communicante d'origine EC1 et l'entité communicante destinataire EC2.

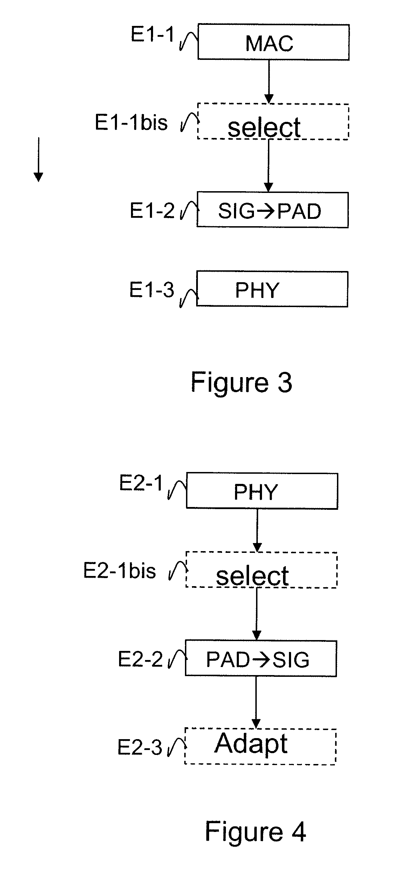

**La** **figure 3** décrit ainsi les étapes du procédé de transmission d'informations de signalisation mis en oeuvre dans l'entité communicante d'origine.

En une étape E1-1, le générateur de trame GEN_MAC délivre des trames MAC de couche de liaison de données au générateur GEN_PHY de trames physiques PHY.

En une étape E1-2, le générateur de trame physique constitue une trame physique à partir de la trame MAC. Pour cela il constitue d'une part l'entête et le corps de trame selon les recommandations spécifiées pour le système de télécommunication considéré. Puis, le générateur de trame insère des informations de signalisation SIG dans une partie de la séquence de bourrage du champ de fin de trame PAD.

Les informations de signalisation sont par exemple, et de façon non limitative, une indication de qualité de signal reçu, ou bien encore une indication de débit de transmission. Dans le cas d'une transmission radio, les informations peuvent être également une indication de niveau de puissance de signal reçu, ou bien encore le schéma de modulation et de codage également connu sous le terme MCS (pour "Modulation and Coding Scheme" en anglais) qui est suggéré par l'entité communicante d'origine pour une transmission adaptée au lien.

Dans un mode particulier de réalisation, le générateur de trame physique sélectionne au préalable en une étape optionnelle E1-1bis les trames MAC de type contrôle. Les informations de signalisation sont ainsi insérées selon l'étape E1-2 dans les séquences de bourrage associées aux trames sélectionnées, ces trames de contrôle ayant une longueur de séquence de bourrage connue par l'entité communicante destinataire.

Par exemple, dans le cas du système de télécommunication Wifi, la longueur de la séquence de bourrage est déterminée par le débit binaire véhiculée et le type de modulation utilisée pour le transport. Ainsi, la séquence de bourrage des trames de contrôle ACK, BlockAck et CTS comportent un minimum de 10 bits correspondant à un débit binaire de 6 Mb/s et un débit symbole OFDM de 24.

La séquence de bourrage du champ de fin de trame peut ainsi par exemple admettre 4 bits comprenant une indication de puissance de signal reçu RSNI (pour "Received Signal to Noise Indicator" en anglais), 4 bits comportant une indication de qualité de puissance de signal reçu RCPI (pour "Received Channel Power Indicator" en anglais). Les deux bits restant peuvent être en outre utilisé pour un contrôle d'erreur, par exemple par 2 bits de contrôle de parité. Le champ de fin de trame est complété si nécessaire par des bits de bourrage positionnés à une valeur prédéfinie.

La séquence de bourrage du champ de fin de trame peut également comporter un champ de 6 bits comprenant les indications du schéma de modulation et de codage MCS, suivi de 4 bits de contrôle de parité et si nécessaire de bits de bourrage positionnés à une valeur prédéfinie.

Le nombre de bits utilisés pour chaque indicateur n'est donné qu'à titre illustratif, et toute autre combinaison d'indicateurs peut être envisagée. De même le nombre de bits utilisés par la transmission de signalisation est configurable tant qu'il reste inférieur au minimum disponible.

En une étape E1-3, l'émetteur de l'entité communicante d'origine transmet les trames physiques délivrées par le générateur GEN_PHY à destination de l'entité communicante destinataire.

La **figure 4** décrit les étapes du procédé de réception d'information de signalisation mis en oeuvre dans l'entité communicante destinataire.

En une étape E2-1, le récepteur REC de l'entité communicante destinataire reçoit les trames physiques émises par l'entité communicante d'origine.

En une étape E2-2, le décodeur DECODE de l'entité communicante destinataire analyse le contenu de la séquence de bourrage des trames de transport et extrait les informations de signalisation présentes.

Dans un mode particulier de réalisation, le décodeur sélectionne au préalable en une étape E2-1bis optionnelle les trames physiques véhiculant des trames MAC de type contrôle. Ces trames MAC de type contrôle sont par exemple les trames de contrôle ACK, BlockAck et CTS précitées pour le système de télécommunication Wifi.

Il est à noter que l'insertion d'information de signalisation dans une partie du champ de fin de trame ne modifie pas le décodage de la trame physique, ce champ étant réservé à l'origine au support de bits de bourrage positionnés à une valeur prédéfinie et non exploités pour le décodage de la trame physique. Une entité communicante destinataire peut ainsi décoder l'information de signalisation transportée ou bien ignorer le contenu de la séquence de bourrage. Cette propriété permet d'assurer l'interopérabilité entre des entités communicantes d'origine comportant les moyens de mise en oeuvre du procédé de transmission selon l'invention et des entités communicantes destinataires ne comportant pas les moyens de mise en oeuvre du procédé de réception selon l'invention.

De même, une entité communicante destinataire comportant les moyens de mise en oeuvre du procédé de réception selon l'invention est apte à recevoir une trame physique ne comportant pas d'information de signalisation en provenance d'une entité d'origine ne comportant pas les moyens de mise en oeuvre du procédé de transmission selon l'invention.

En une étape E2-3, l'entité communicante peut, si elle le désire, mettre en oeuvre une adaptation de lien par exemple par modification du débit, du schéma de modulation et codage, de la puissance émission, c'est-à-dire par modification de l'agencement des données. L'adaptation de lien, dans le cas du système Wifi, peut être mise en oeuvre conformément à la spécification 802.11 établie par l'organisme IEEE (pour "Institute of Electrical and Electronics Engineers" en anglais).

L'invention concerne également un programme d'ordinateur notamment un programme d'ordinateur sur ou dans un support d'enregistrement d'informations, adapté à mettre en oeuvre l'invention dans une entité communicante d'origine. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter les étapes du procédé de transmission selon l'invention mises en oeuvre l'entité communicante d'origine.

L'invention concerne également un programme d'ordinateur notamment un programme d'ordinateur sur ou dans un support d'enregistrement d'informations, adapté à mettre en oeuvre l'invention dans une entité communicante destinataire. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter les étapes du procédé de réception selon l'invention mises en oeuvre l'entité communicante destinataire.

## Revendications

1. Procédé de transmission d'une information de signalisation entre une entité communicante d'origine (EC1) et une entité communicante destinataire (EC2), lesdites entités étant en communication en mettant en oeuvre des trames d'une couche de liaison de données (MAC) encapsulées respectivement dans des trames d'une couche physique comprenant en outre un entête et un champ de fin de trame comportant une séquence de bourrage, **caractérisé en ce que** ladite information est transmise dans au moins une séquence de bourrage.

2. Procédé de transmission selon la revendication 1 dans lequel ladite au moins une des dites trames d'une couche de liaison de données est une trame de contrôle.

3. Procédé de transmission selon la revendication 2 dans lequel la trame de contrôle est une trame de contrôle de l'un des types ACK, BlockAck, ou CTS.

4. Procédé de transmission selon l'une quelconque des revendications 1 à 3 dans lequel l'information de signalisation est une indication d'une puissance d'un signal reçu.

5. Procédé selon l'une quelconque des revendications 1 à 4 dans lequel l'information de signalisation est une indication d'une qualité d'un signal reçu.

6. Procédé selon l'une quelconque des revendications 1 à 5 dans lequel l'information de signalisation est une indication d'un schéma de modulation et de codage.

7. Procédé de réception d'une information de signalisation entre une entité communicante d'origine (EC1) et une entité communicante destinataire (EC2), lesdites entités étant en communication en mettant en oeuvre des trames d'une couche de liaison de données (MAC) encapsulées respectivement dans des trames d'une couche physique comprenant en outre un entête et un champ de fin de trame comportant une séquence de bourrage, **caractérisé en ce qu'**il décode ladite information de signalisation transmise dans au moins une séquence de bourrage.

8. Dispositif de transmission d'information de signalisation pour une entité communicante d'origine (EC1) en communication avec une entité communicante destinataire (EC2), lesdites entités communicantes mettant en oeuvre des trames d'une couche de liaison de données (MAC) encapsulées respectivement dans des trames (PHY) d'une couche physique comprenant en outre un entête et un champ de fin de trame (PAD) comportant une séquence de bourrage,ledit dispositif étant **caractérisé en ce qu'**il comprend :
- des moyens agencés pour insérer ladite information de signalisation dans au moins une séquence de bourrage.

9. Dispositif de réception d'information de signalisation pour une entité communicante destinataire (EC2) en communication avec une entité communicante d'origine (EC1), lesdites entités communicantes mettant en oeuvre des trames d'une couche de liaison de données (MAC) encapsulées respectivement dans des trames (PHY) d'une couche physique comprenant en outre un entête et un champ de fin de trame comportant une séquence de bourrage, ledit dispositif étant **caractérisé en ce qu'**il comprend :
- des moyens agencés pour décoder ladite information de signalisation transmise dans au moins une séquence de bourrage.

10. Entité communicante comportant l'un au moins des dispositifs selon les revendications 8 ou 9.

11. Programme d'ordinateur pour une entité communicante d'origine comprenant les instructions logicielles pour commander la mise en oeuvre par ladite entité communicante d'origine des étapes du procédé selon l'une quelconques des revendications 1 à 6 lorsque le programme est exécuté par l'entité communicante d'origine.

12. Programme d'ordinateur pour une entité communicante destinataire comprenant les instructions logicielles pour commander la mise en oeuvre par ladite entité communicante destinataires des étapes du procédé selon la revendication 7 lorsque le programme est exécuté par l'entité communicante destinataire
